# FASCICULE DE BREVET EUROPEEN

(11) **EP 1 832 473 B1**
(45) Date de publication et mention de la délivrance du brevet: **12.10.2011**
(21) Numéro de dépôt: 07290248.9
(22) Date de dépôt: 27.02.2007
(51) Int. Cl.: B60R 1/08

(54) **Procédé pour augmenter le champ de vision dans le miroir d'un rétroviseur extérieur de véhicule, et véhicule sur lequel ce procédé est mis en oeuvre**
Verfahren zum Vergrößern des Sichtfelds in einem Außenrückspiegel eines Fahrzeugs und Fahrzeug, in dem dieses Verfahren umgesetzt wird
Method for increasing the field of view in the wing mirror of a vehicle, and vehicle in which this method is implemented

(30) Priorité: 07.03.2006 FR 0602030
(43) Date de publication de la demande: 12.09.2007
(73) Titulaire: SMR Patents S.à.r.l., 1653 Luxembourg (LU)
(72) Inventeur: Duroux, Bernard, 78890 Garancières (FR)
(74) Mandataire: De Souza, Paula

(56) Documents cités:
- EP-A1- 0 830 964
- EP-A2- 0 860 323
- ES-A1- 2 189 615
- JP-A- 11 115 632
- JP-A- 62 055 239
- US-A- 3 610 739
- US-A- 4 834 521

## Description

La présente invention concerne un procédé pour augmenter le champ de vision dans le miroir d'un rétroviseur extérieur fixé sur l'un au moins des côtés d'un véhicule, notamment d'une automobile.

Selon la réglementation actuellement en vigueur, le champ de vision dans le miroir des rétroviseurs extérieurs d'un véhicule automobile doit être suffisamment grand pour que le conducteur puisse voir, de chaque côté du véhicule, une portion de route plane et horizontale s'étendant sur 4 mètres de large à partir de 20 mètres en arrière du plan vertical passant par ses points oculaires, jusqu'à l'horizon.

Le conducteur doit en outre pouvoir commencer à voir la route sur une largeur de 1 mètre à partir de 4 mètres en arrière du plan vertical passant par ses points oculaires.

Une solution pour satisfaire à la réglementation actuelle consiste à accoître les dimensions du miroir des rétroviseurs extérieurs.

Cette solution nécessite toutefois l'installation de rétroviseurs plus encombrants et plus lourds, qui ont l'inconvénient d'augmenter le coefficient de pénétration des véhicules, de favoriser la formation de vibrations et d'être onéreux en raison des mécanismes de rabattement dont ils doivent être pourvus pour satisfaire le test d'impact au pendule.

La présente invention se propose de satisfaire à la réglementation actuelle sans augmenter les dimensions des rétroviseurs extérieurs et, pour ce faire, elle a pour objet un procédé pour augmenter le champ de vision dans le miroir d'un rétroviseur extérieur fixé sur l'un au moins des côtés d'un véhicule, notamment d'une automobile, ce procédé étant caractérisé en ce qu'il comprend les étapes consistant à équiper le rétroviseur d'un miroir sphérique convexe ayant un rayon de courbure de l'ordre de 120 à 135 cm, et à fixer ce rétroviseur sur le véhicule de façon que la distance entre le centre de son miroir et le milieu du segment reliant les yeux du conducteur, projetée sur l'axe longitudinal du véhicule, soit de l'ordre de 20 à 40 cm.

Grâce à ces étapes, la partie de route définie par la réglementation actuelle peut être vue en totalité dans le miroir d'un rétroviseur extérieur de dimensions conventionnelles.

Le respect de la réglementation peut donc être assurée avec des rétroviseurs extérieurs restant peu encombrants et relativement légers, ce qui évite une augmentation du coefficient de pénétration des véhicules et réduit les risques de formation de vibrations.

Le procédé selon la présente invention permet en outre de supprimer l'angle mort non visible dans les rétroviseurs extérieurs actuels et augmente par conséquent les conditions de sécurité de la circulation routière.

De préférence, le rétroviseur est fixé sur le côté du véhicule de façon que la distance, mesurée verticalement, entre le centre de son miroir et le milieu du segment reliant les yeux du conducteur soit de l'ordre de 0 à 40 cm.

Dans ce cas, le rétroviseur utilisé peut avoir des dimensions encore plus faibles, ce qui lui permet de former sur la caisse du véhicule une saillie encore moins grande.

Selon un mode de réalisation particulière, le miroir du rétroviseur peut être en verre et posséder un rayon de courbure de l'ordre de 130 à 135 cm.

En variante, il peut être en matière plastique et posséder un rayon de courbure de l'ordre de 120 à 125 cm.

Lorsque le miroir du rétroviseur est en matière plastique, le procédé de moulage mis en oeuvre permet de le réaliser avec des dimensions plus précises que celles d'un miroir de rétroviseur en verre.

En fait, le rayon de courbure du miroir en matière plastique peut être plus petit que celui d'un miroir en verre parce que la dispersion de fabrication est plus faible pour des produits en matière plastique que pour des produits en verre.

Avantageusement, le rétroviseur forme sur le véhicule une saillie inférieure à 10 cm.

Son prix peut par conséquent rester relativement faible puisqu'il peut être dépourvu de moyens de rabattement.

Lorsque le véhicule comprend des portières avant comportant un triangle de portière métallique, le rétroviseur peut comporter une embase fixée sur le triangle de la portière avant située du côté du conducteur ou du côté du passager.

En variante, lorsque le véhicule comprend des portières avant comportant une custode transparente, le rétroviseur peut comporter une embase transparente fixée sur la custode de la portière avant située du côté du conducteur ou du côté du passager.

Pour la mise en oeuvre du procédé selon l'invention, deux rétroviseurs peuvent bien entendu être fixés l'un du côté du conducteur et l'autre du côté du passager.

La présente invention concerne également un véhicule, notamment une automobile, sur lequel le procédé ci-dessus est mis en oeuvre.

Plusieurs modes de mise en oeuvre du procédé selon la présente invention seront décrits ci-après à titre d'exemples nullement limitatifs en référence aux dessins annexés dans lesquels :
- la figure 1 est une vue de dessus schématique d'une automobile montrant les portions de route devant être vues par le conducteur dans les rétroviseurs extérieurs ;
- la figure 2 est une vue en perspective schématique d'une automobile sur laquelle le procédé conforme à l'invention est mis en oeuvre et dont le rétroviseur extérieur situé du côté du conducteur permet de voir la portion de route correspondante définie par la réglementation en vigueur ;
- la figure 3 montre le champ de vision dans le miroir du rétroviseur extérieur situé du côté du conducteur de l'automobile visible sur la figure 2 ;
- la figure 4 est une vue en perspective partielle montrant une portière avant d'une automobile sur laquelle le procédé conforme à l'invention est mis en oeuvre, cette portière étant située du côté du conducteur et comportant un triangle métallique à la partie inférieure duquel est fixé un rétroviseur permettant de voir la portion de route réglementaire ;
- la figure 5 est une vue en perspective partielle qui se différencie de la figure 4 en ce que le rétroviseur est fixé à la partie supérieure du triangle ; et
- la figure 6 est une vue de côté schématique d'une automobile sur laquelle le procédé selon l'invention est mis en oeuvre.

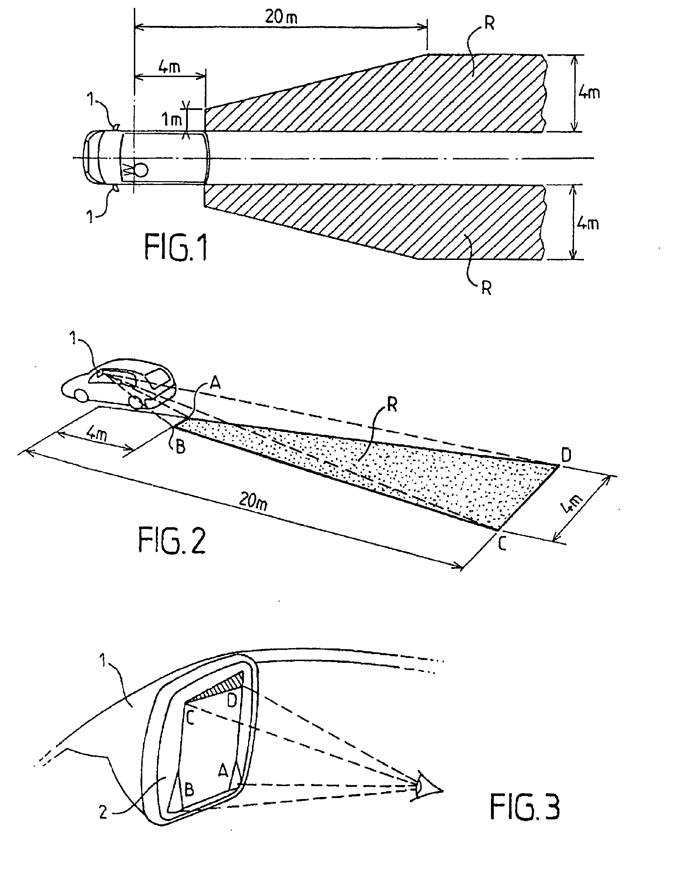

En se référant tout d'abord aux figures 1 et 2, on rappellera que la réglementation en vigueur exige que le conducteur puisse voir dans les rétroviseurs extérieurs 1, de chaque côté du véhicule, une portion de route R s'étendant sur 4 mètres de large à partir de 20 mètres en arrière du plan vertical passant par ses points oculaires, jusqu'à l'horizon.

La réglementation exige également que le conducteur puisse commencer à voir la route sur une largeur de 1 mètre à partir de 4 mètres en arrière du plan vertical passant par ses points oculaires.

Sur la figure 2, la portion de route qui doit être visible dans le rétroviseur extérieur, côté conducteur, est définie d'une part, par un quadrilatère comportant un côté AB perpendiculaire à l'axe longitudinal de l'automobile et ayant un mètre de long, un côté DC parallèle au côté AB et ayant 4 mètres de long, un côté AD s'étendant dans le prolongement du côté conducteur de l'automobile, et un côté BC formant un angle différent de 90° avec les côtés AB et DC, et par un rectangle de 4 mètres de large se prolongeant au-delà du côté DC, jusqu'à l'infini.

La figure 3 représente la portion de route telle qu'elle apparaît dans le miroir du rétroviseur extérieur située du côté du conducteur.

Pour que les rétroviseurs extérieurs 1 de l'automobile permettent au conducteur de voir toute la portion de route définie par la réglementation, ils sont pourvus d'un miroir sphérique 2 convexe et ayant un rayon de courbure de l'ordre de 120 à 135 cm.

Ils sont en outre fixés sur l'automobile de façon que la distance d1 entre le centre de leur miroir et le milieu du segment reliant les yeux de conducteur, projetée sur l'axe longitudinal de l'automobile, soit de l'ordre de 20 à 40 cm.

Quant à la distance d2, mesurée verticalement, entre le centre de leur miroir et le milieu du segment reliant les yeux du conducteur, elle est de préférence de l'ordre de 0 à 40 cm.

On notera ici que l'application des dispositions ci-dessus permet de supprimer l'angle mort non visible dans les rétroviseurs extérieurs actuels et améliore par conséquent les conditions de sécurité routière.

Il est par ailleurs souhaitable que les rétroviseurs extérieurs forment sur l'automobile des saillies de moins de 10 cm afin de ne pas devoir être soumis au test du pendule.

Pour cette raison, leur miroir possède généralement un rayon de courbure de l'ordre de 130 à 135 cm lorsqu'il est en verre et de l'ordre de 120 à 125 cm lorsqu'il est en matière plastique.

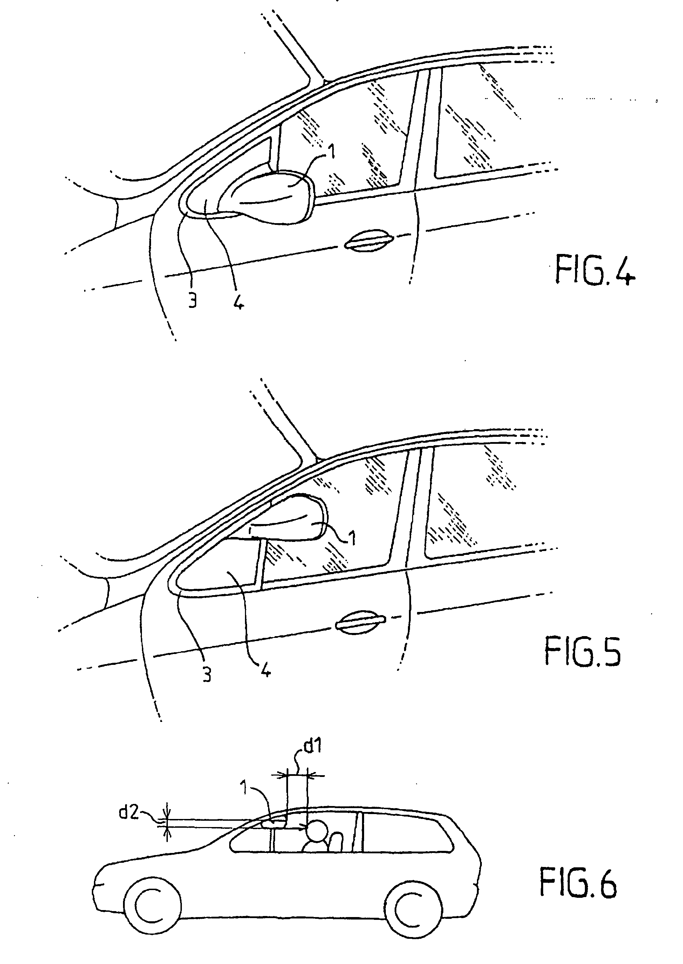

Les figures 4 et 5 représentent chacune une portière avant située du côté du conducteur et comportant un triangle métallique 3 sur lequel est fixée l'embase 4 d'un rétroviseur permettant de voir la portion de route réglementaire.

L'embase 4 du rétroviseur visible sur la figure 4 est fixée à la partie inférieure du triangle 3 alors que celle du rétroviseur visible sur la figure 5 est fixée à la partie supérieure du triangle.

La portière avant située du côté du passager possède également un triangle métallique, son rétroviseur extérieur étant fixé sur ce dernier dans une position symétrique, par rapport au plan longitudinal médian de l'automobile, de celle du rétroviseur situé du côté du conducteur.

Les portières avant de l'automobile peuvent comporter une custode transparente, par exemple en verre ou en matière plastique. Il est souhaitable dans ce cas que l'embase des rétroviseurs extérieurs soit également transparente.

Par ailleurs, les rétroviseurs extérieurs fixés sur les portières avant peuvent dans certains cas comporter une embase transparente faisant office de custode.

Il ressort de ce qui précède que la présente invention permet d'augmenter sensiblement le champ de vision dans le miroir des rétroviseurs extérieurs, sans que ceux-ci soient surdimentionnés et présentent les inconvénients des rétroviseurs conventionnels formant une saillie de plus de 10 cm sur les véhicules.

## Revendications

1. Procédé pour augmenter le champ de vision du conducteur d'un véhicule, notamment d'une automobile, dans un rétroviseur extérieur (1) fixé sur l'un au moins des côtés du véhicule et comportant un miroir sphérique convexe (2) ayant un rayon de courbure de l'ordre de 120 à 135 cm, **caractérisé en ce que** la distance entre le centre du miroir (2) et le milieu du segment reliant les yeux du conducteur, projetée sur l'axe longitudinal du véhicule, est de l'ordre de 20 à 40 cm.

2. Procédé selon la revendication 1, **caractérisé en ce que** le rétroviseur (1) est fixé sur le côté du véhicule à une distance, mesurée verticalement, entre le centre du miroir (2) et le milieu du segment reliant les yeux du conducteur, de l'ordre de 0 à 40 cm.

3. Procédé selon la revendication 1 ou 2, **caractérisé en ce que** le miroir (2) du rétroviseur (1) est en verre et possède un rayon de courbure de l'ordre de 130 à 135 cm.

4. Procédé selon la revendication 1 ou 2, **caractérisé en ce que** le miroir (2) du rétroviseur (1) est en matière plastique et possède un rayon de courbure de l'ordre de 120 à 125 cm.

5. Procédé selon l'une quelconque des revendications précédentes, **caractérisé en ce que** le rétroviseur (1) forme sur le véhicule une saillie inférieure à 10 cm.

6. Procédé selon l'une quelconque des revendications 1 à 5, mis en oeuvre sur un véhicule comprenant des portières avant comportant un triangle de portière métallique (3), **caractérisé en ce que** le rétroviseur (1) comporte une embase (4) fixée sur le triangle de la portière avant située du côté du conducteur ou du côté du passager.

7. Procédé selon l'une quelconque des revendications 1 à 5, mis en oeuvre sur un véhicule comprenant des portières avant comportant une custode transparente, **caractérisé en ce que** le rétroviseur (1) comporte une embase transparente fixée sur la custode de la portière avant située du côté du conducteur ou du côté du passager.

8. Procédé selon l'une quelconque des revendications 1 à 5, mis en oeuvre sur un véhicule comprenant des portières avant, **caractérisé en ce que** le rétroviseur (1) comporte une embase transparente faisant office de custode de portière avant.

9. Procédé selon l'une quelconque des revendications précédentes, **caractérisé en ce qu'**il consiste à utiliser deux rétroviseurs (1) fixés l'un du côté du conducteur et l'autre du côté du passager.

10. Véhicule, notamment automobile, sur lequel le procédé selon l'une quelconque des revendications précédentes est mis en oeuvre.

## Claims

1. A method for increasing the field of vision of a driver of a vehicle, in particular a car, in a wing mirror (1) fixed to at least one side of the vehicle and including a convex spherical mirror (2) having a radius of curvature of the order of 120 to 135 cm, **characterised in that** the distance between the centre of the mirror (2) and the mid-point of the segment connecting the eyes of the driver, as projected on to the longitudinal axis of the vehicle, is of the order of 20 to 40 cm.

2. A method according to claim 1, **characterised in that** the wing mirror (1) is fixed to the side of the vehicle at a distance, as measured vertically, between the centre of the mirror (2) and the mid-point of the segment connecting the eyes of the driver of the order of 0 to 40 cm.

3. A method according to claim 1 or claim 2, **characterised in that** the mirror (2) of the wing mirror (1) is made of glass and has a radius of curvature of the order of 130 to 135 cm.

4. A method according to claim 1 or claim 2, **characterised in that** the mirror (2) of the wing mirror (1) is made of plastic and has a radius of curvature of the order of 120 to 125 cm.

5. A method according to any one of the preceding claims, **characterised in that** the wing mirror (1) projects from the vehicle by less than 10 cm.

6. A method according to any one of claims 1 to 5, implemented in a vehicle comprising front doors having a metal door triangle (3), **characterised in that** the wing mirror (1) includes a base (4) fixed to the triangle of the front door situated on the driver side or on the passenger side.

7. A method according to any one of claims 1 to 5, implemented in a vehicle comprising front doors including a transparent rear side panel, **characterised in that** the wing mirror (1) includes a transparent base fixed to the rear side panel of the front door situated on the driver side or on the passenger side.

8. A method according to any one of claims 1 to 5, implemented in a vehicle comprising front doors, **characterised in that** the wing mirror (1) includes a transparent base serving as the front door rear side panel.

9. A method according to any one of the preceding claims, **characterised in that** it consists in using two wing mirrors (1), one fixed to the driver side and the other to the passenger side.

10. A vehicle, in particular a car, in which the method according to any one of the preceding claims is implemented.

## Patentansprüche

1. Verfahren zum Vergrößern des Gesichtsfelds des Fahrers eines Fahrzeugs - insbesondere eines Kraftfahrzeugs - in einem Außenrückspiegel (1), der auf wenigstens einer der Seiten des Fahrzeugs befestigt ist und einen konvexen sphärischen Spiegel (2) mit einem Krümmungsradius in der Größenordnung von 120 bis 135 cm umfasst,
**dadurch gekennzeichnet, dass** der auf die Längsachse des Fahrzeugs projizierte Abstand zwischen dem Zentrum des Spiegels (2) und der Mitte des die Augen des Fahrers verbindenden Segments in der Größenordnung von 20 bis 40 cm liegt.

2. Verfahren nach Anspruch 1, **dadurch gekennzeichnet, dass** der Rückspiegel (1) auf der Seite des Fahrzeugs mit einem zwischen dem Zentrum des Spiegels (2) und der Mitte des Segments vertikal gemessenen Abstand der Größenordnung 0 bis 40 cm befestigt ist.

3. Verfahren nach Anspruch 1 oder 2, **dadurch gekennzeichnet, dass** der Spiegel (2) des Rückspiegels (1) aus Glas ist und einen Krümmungsradius in der Größenordnung von 130 bis 135 cm besitzt.

4. Verfahren nach Anspruch 1 oder 2, **dadurch gekennzeichnet, dass** der Spiegel (2) des Rückspiegels (1) aus einem Plastikmaterial ist und einen Krümmungsradius in der Größenordnung von 120 bis 125 cm besitzt.

5. Verfahren nach einem der vorhergehenden Ansprüche, **dadurch gekennzeichnet, dass** der Rückspiegel (1) an dem Fahrzeug einen Vorsprung von weniger als 10 cm bildet.

6. Verfahren nach einem der Ansprüche 1 bis 5, angewendet bei einem Fahrzeug mit Vordertüren mit einem metallischen Türdreieck (3), **dadurch gekennzeichnet, dass** der Rückspiegel (1) einen an dem Türdreieck der fahrerseitigen oder beifahrerseitigen Vordertür befestigten Sockel (4) umfasst.

7. Verfahren nach einem der Ansprüche 1 bis 5, angewendet bei einem Fahrzeug mit Vordertüren mit einem durchsichtigen Dreiecksfenster, **dadurch gekennzeichnet, dass** der Rückspiegel (1) einen auf dem Dreiecksfenster der fahrerseitigen oder beifahrerseitigen Vordertür befestigten durchsichtigen Sockel umfasst.

8. Verfahren nach einem der Ansprüche 1 bis 5, angewendet bei einem Fahrzeug mit Vordertüren, **dadurch gekennzeichnet, dass** der Rückspiegel (1) einen als Vordertür-Dreiecksfenster dienenden durchsichtigen Sockel umfasst.

9. Verfahren nach einem der vorhergehenden Ansprüche, **dadurch gekennzeichnet, dass** es darin besteht, zwei Rückspiegel (1) zu verwenden, den einen auf der Fahrerseite befestigt und andren auf der Beifahrerseite.

10. Fahrzeug, insbesondere Kraftfahrzeug, bei dem das Verfahren nach einem der vorhergehenden Ansprüche angewendet wird.
